(19) Europäisches Patentamt

European Patent Office

Office européen des brevets

(11) EP 2 733 867 A1

(12) **EUROPEAN PATENT APPLICATION**

(43) Date of publication:
21.05.2014 Bulletin 2014/21

(21) Application number: 12193149.7

(22) Date of filing: 19.11.2012

(51) Int Cl.:
$H04B\ 7/08$ (2006.01)  $H04L\ 25/03$ (2006.01)
$H04B\ 7/06$ (2006.01)  $H04B\ 7/04$ (2006.01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: BlackBerry Limited
Waterloo, ON N2K 0A7 (CA)

(72) Inventors:
• Leach, Martin Geoffrey
Cambridge, CB 22 7GG (GB)
• Zielinski, Ernst Slawomir
44799 Bochum (DE)

(74) Representative: Finnie, Peter John
Gill Jennings & Every LLP
The Broadgate Tower
20 Primrose Street
London EC2A 2ES (GB)

(54) **Reduced-Complexity Maximum Likelihood MIMO Receiver**

(57) A method of performing maximum likelihood detection on spatially-multiplexed streams in a multiple-input multiple-output (MIMO) communication system, the method comprising: receiving plurality of received signals (y1, y2) at a plurality of receiver antennas (132, 133), the plurality of received signals corresponding to a plurality of transmit symbols (x1, x2), each transmit symbol being one of a number M possible symbols, for each of a value k = 1 to M: select a first stream candidate symbol, for each receiver antenna, calculate a residual signal, combine said calculated residual signals, select a second stream candidate symbol for said value k based on the result of said combination to form a symbol pair comprising said first stream candidate symbol and said second stream candidate symbol; and calculate a corresponding distance metric for said symbol pair for said value k, selecting one of the symbol pairs based on said calculated distance metrics.

FIG. 1

EP 2 733 867 A1

**Description**

**FIELD OF THE TECHNOLOGY**

The present disclosure relates to electronic devices, wireless communication systems, and methods of operation thereof, for facilitating maximum likelihood (ML) detection in multiple-input multiple-output (MIMO) communication systems.

**BACKGROUND**

In modern wireless telecommunication systems, digital modulation can be used to transfer digital data over physical channels. By mapping digital data to predefined symbols, where each symbol sets the characteristics of an analog carrier signal, digital data can be transferred long distances. From here, a receiving device attempts to reconstruct the data by extracting the transmitted symbols from the received carrier signal. However, as a transmitted carrier signal is subject to interference and can pick up noise at detector equipment, methods are employed to accurately estimate these symbols despite the changes to the carrier signal. One of the most accurate of these methods is the maximum likelihood (ML) detector.

The throughput and reliability of a wireless system can be improved by using multiple antennas in a multiple-input multiple-output (MIMO) system, where more than one data stream can be sent at the same time. However, the complexity of ML detection increases exponentially with the number of streams used, therefore traditional ML detection is often found to be unsuitable for MIMO systems. Other detectors have been used instead of ML detection, such as minimum mean squared error (MMSE) detectors and zero-forcing (ZF) detectors. However, while requiring fewer resources than an ML detector, the accuracy of these detectors can be substantially worse than an ML detector.

There is therefore a need for a resource-efficient detector, capable of accurately estimating symbols transmitted over a MIMO wireless system. Low complexity detectors are particularly beneficial to mobile devices, as these devices may have stricter computational restrictions to reduce battery usage, maintain safe temperatures and to make the most of limited processing power. It is particularly beneficial to ensure that efficiency improvements are not made at the detriment of accuracy, as an accurate detector reduces the error rate, thereby keeping bandwidth usage low and improving the user experience.

**BRIEF DESCRIPTION OF DRAWINGS**

Examples of the present proposed approach will now be described in detail with reference to the accompanying drawings, in which:

**Figure 1** is a simplified block diagram of an Evolved Node B (eNb) and user equipment (UE) communicating in a 2-stream, 2x2 antenna configuration in accordance with example embodiments of the present disclosure;

**Figure 2** is an example constellation diagram for **4-QPSK** (quadrature phase-shift keying) with two example symbols highlighted;

**Figure 3** is an example constellation diagram for 16-QAM (quadrature amplitude modulation) with two example symbols highlighted;

**Figure 4** illustrates a brute force approach to selecting a pair of symbols in a maximum-likelihood approach;

**Figure 5** illustrates a reduced complexity approach to selecting a pair of symbols in a maximum-likelihood approach in accordance with example embodiments of the present disclosure;

**Figure 6** is a flow diagram illustrating steps for calculating a function $g(x'_{1,k})$ from a number of received signals;

**Figures 7** is a simplified block diagram of an eNb and UE communicating in a 2-stream, 4x4 antenna configuration in accordance with example embodiments of the present disclosure; and

**Figure 8** is a flow diagram illustrating the steps for calculating a whitening matrix for interference suppression in accordance with example embodiments of the present invention.

**DETAILED DESCRIPTION**

In one embodiment, the present disclosure provides a method of performing maximum likelihood detection on spatially-multiplexed streams in a multiple-input multiple-output (MIMO) communication system, the method comprising: receiving plurality of received signals at a plurality of receiver antennas, the plurality of received signals corresponding to a plurality of transmit symbols, each transmit symbol being one of a number M possible symbols, for each of a value k = 1 to M: select a first stream candidate symbol, for each receiver antenna, calculate a residual signal, combine said calculated residual signals, select a second stream candidate symbol for said value k based on the result of said combination to form a symbol pair comprising said first stream candidate symbol and said second stream candidate symbol; and calculate a corresponding distance metric for said symbol pair for said value k, selecting one of the symbol pairs based on said calculated distance metrics.

This embodiment provides an improved maximum likelihood (ML) detector that is capable of selecting a most-likely pair of transmitted symbols based on signals received at a detector. By selecting a second stream candidate symbol based on a combining of residual signals, the proposed ML detector is able to reduce the number of distance metrics required to assess which pair of candidates to choose.

In some example embodiments, the calculating a residual signal comprises subtracting a function of said first stream candidate symbol from the received signal corresponding to the receiver antenna.

In some example embodiments, the function of said first stream candidate symbol comprises the first stream candidate symbol multiplied by an element of a channel matrix corresponding to said receiver antenna.

In some example embodiments, prior to combining said calculated residual signals, match-filter said residual signals on each receiver antenna.

In some example embodiments, match-filtering said residual signals comprises multiplying said residual signals by a conjugate of an element of a channel matrix corresponding to each receiver antenna.

In some example embodiments, combining said calculated residual signals comprises a maximum ratio combine (MRC) across said plurality of receiver antennas.

In some example embodiments, the combining further comprises normalising the combination.

In some example embodiments, the result of said combination is of the form $g\left(x'_{1,k}\right) = \dfrac{\widehat{h}_{c2}^{H} y - \widehat{h}_{c2}^{H} \widehat{h}_{c1} x'_{1,k}}{\left\|\widehat{h}_{c2}\right\|^2}$,

where $x'_{1,k}$ is said first stream candidate symbol, $\widehat{h}_{c2}$ is a second column of a channel matrix, and y is a vector of said received signals.

In some example embodiments, selecting a second stream candidate symbol comprises selecting a symbol equal to the result of said combination.

In some example embodiments, selecting a second candidate symbol comprises slicing the result of said combination.

In some example embodiments, selecting the one of the symbol pairs is a hard decision based of the symbol pair with smallest corresponding calculated distance metric.

In some example embodiments, selecting the one of the symbol pairs is a soft decision comprising: performing two minimum searches, each minimum search being performed over half said calculated distance metrics; and calculating a log likelihood ratio 'LLR' using said two minimum searches.

In some example embodiments, the LLR is of the form $LLR_b \approx \dfrac{1}{\beta 2\sigma^2}\left\{\min_{k\epsilon K_0}(D_k) - \min_{k\epsilon K_1}(D_k)\right\}$,

where $2\sigma^2$ is an estimate of a power noise, $\min_{\kappa\epsilon k_0}(D_\kappa)$ and $\min_{\kappa\epsilon k_1}(D_\kappa)$ are the two minimum searches, $D_k$ is the calculated distance metric, $K_0$ is the set of values of k corresponding to a bit value of 0, and $K_1$ is the set of values of k corresponding to a bit value of 1.

In some example embodiments, at least one of the received signals and a channel matrix are noise whitened using a noise whitening matrix determined from an averaged covariance.

In yet another embodiment, the present disclosure provides an electronic device comprising one or more processors and memory comprising instructions which, when executed by one or more of the processors, cause the device to receive a plurality of received signals at a plurality of receiver antennas, the plurality of received signals corresponding to a plurality of transmit symbols, each transmit symbol being one of a number M possible symbols, for each of a value k = 1 to M: select a first stream candidate symbol, for each receiver antenna, calculate a residual signal, combine said calculated residual signals, select a second stream candidate symbol for said value k based on the result of said combination to form a symbol pair comprising said first stream candidate symbol and said second stream candidate symbol; and calculate a corresponding distance metric for said symbol pair for said value k, select one of the symbol pairs based on said calculated distance metrics.

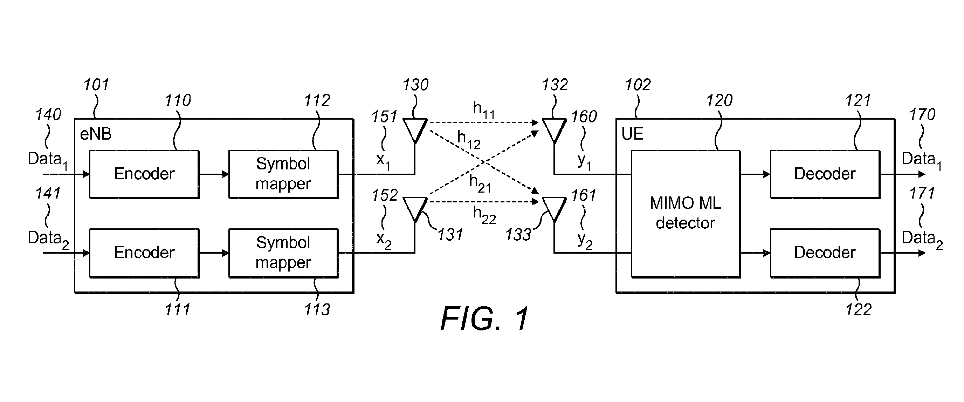

Reference will now be made to Figure 1 which shows an eNb 101 in wireless communication with a UE 102 for the purpose of sending data steams 140 and 141 to the UE 102. In this example, a 2x2 MIMO system is shown, where the eNb 101 has two transmit antennas 130 and 131, and the UE 102 has two receiver antennas 132 and 133.

As there is more than one transmit antenna, the eNb 101 may be capable of transmitting more than one data stream over the channel at the same time through spatial multiplexing, thereby increasing the throughput of the data transmission. In this example, two independent pathways for $Data_1$ 140 and $Data_2$ 141 are shown. In alternative embodiments, only a single data path may be processed but then subsequently split into separate streams for transmission.

To prepare the first data stream 140 for transmission, it is passed through an encoder (for example, a convolution encoder), where input data is encoded into encoded bits. Once encoded, this encoded data may be modulated into data symbols at the symbol mapper 112. The symbol mapper 112 may select from a number of predetermined symbols in order to assign one to the input data 140, and output the symbol $x_1$ 151 for the first data stream 140. Similarly a second data stream 141 may be encoded by a separate (or alternatively, the same) encoder 111 and passed through a symbol mapper 113 to form a symbol $x_2$ 152. These symbols 151 and 152 may then be transmitted by transmission antennas 130 and 131 to be received at the UE 102 by receiver antennas 132 and 133.

The signal, $y_1$ 171 and $y_2$ 172, received at the UE may be different from the transmitted symbols $x_1$ 151 and $x_2$ 152 due to a number of factors, such as the properties of the channel, errors gained in the receiver equipment and interference from other signals. Therefore, the received signals, $y_1$ 171 and $y_2$ 172, are processed at a detector 120 in the UE, which attempts to determine which symbols were transmitted based on the received signals.

Although there are a number of possible detectors that may be used, the proposed embodiments utilise a reduced-complexity MIMO maximum likelihood (ML) detector 120, capable of accurately and efficiently identifying the transmitted symbols. Unlike brute-force ML detectors, the proposed ML detector 120 has a complexity that scales linearly with constellation order, rather than exponentially, as will be discussed in greater detail in this application.

Once the original symbols $x_1$ 151 and $x_2$ 152 have been identified by the ML detector 120, they are mapped to the original encoded bits and subsequently decoded at decoders 121 and 122 to form the original data streams 160 and 161.

The block diagram shown in Figure 1 is a highly simplified diagram to illustrate how data can be mapped to symbols, transmitted as separate data streams, received at a receiving device and converted back to the original data. It would be clear to a person skilled in the art that additional steps may be included to facilitate data transmission. For example, there may an interleaver to permute the encoded data at the eNb 101 along with a corresponding deinterleaver at the UE 102, and there may a spatial multiplexer to separate a single input data stream into separate streams for transmission. Although an eNb 101 is used as the example transmitter, the UE 102 may also be capable of transmitting data to an eNb 101 or any other device capable of receiving wireless data. The examples provided in this disclosure are generally related to Long Term Evolution (LTE) and Evolved Universal Terrestrial Radio Access (E-UTRA), however any radio access technology supporting spatial multiplexing may be used, such as WiMax and WIFI technologies.

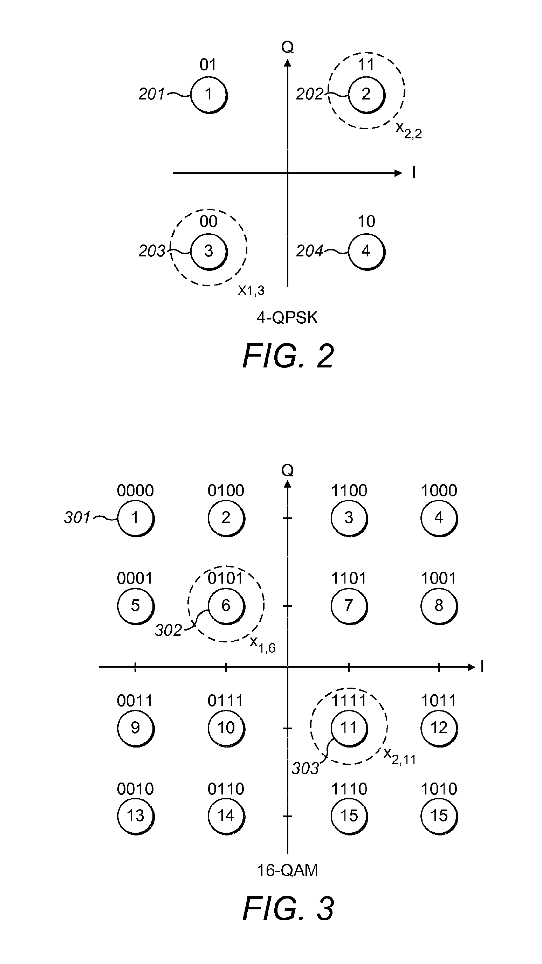

The ML detector 120 proposed in this application determines what symbols were originally selected in symbol mappers 112 and 113. Figure 2 illustrates an example of such a selection in the symbol mappers 112 and 113, where a 4-QPSK (quadrature phase-shifting keying) modulation scheme is used. In the 4-QPSK modulation scheme, data is conveyed by changing the phase of a carrier signal to one of four different phases, as represented by symbols 201, 202, 203 and 204 on the constellation diagram shown in Figure 2. These four symbols can be associated with 2-bits of data each, such that if a carrier signal is given the phase of one of these symbols, then it indicates the data value associated with that symbol. In a symbol mapper 112, if a first stream data value is '00', the mapper 112 looks up the symbol associated with '00' (in this case the third symbol 203) and sends it on as symbol $x_{1,3}$, where $x_{1,3}$ is of the form $x_{stream,symbol}$. Similarly, if a second stream data value is '11', the symbol mapper 113 looks up the symbol associated with '11' (in this case the second symbol) and this is sent on as symbol $x_{2,2}$, thus indicating that the second stream data is using the second symbol. Once these symbols have been mapped, the carrier signals and modulated to match the phases associated with the symbols, and the ML detector 120 at a receiving device attempts to demodulate the signal to determine the originally selected symbols.

Figure 3 shows a different example modulation scheme that can be utilised by symbol mappers 112 and 113, a 16-QAM (quadrature amplitude modulation) system. Here, both the phase and amplitude of a carrier signal can be varied to indicate different data points. For example, the first symbol 301 indicates the same phase as the sixth symbol 302, but has a larger amplitude. By varying the amplitude, as well as the phase, a larger number of symbols can be represented using the same signal. In the example of 16-QAM, there are sixteen available symbols corresponding to 4-bits of data each. Other modulation systems can be used, such as BPSK (binary phase-shift keying) which only provides a choice of two symbols (corresponding to 1-bit of data each), and 64-QAM, which provides a choice of 64 symbols (corresponding to 8-bits of data each).

In the example shown in Figure 3, from the choice of sixteen symbols provided, a symbol mapper 112 for a first stream of data 140 may select the symbol representing the data from the encoded data '0101', the sixth symbol 302, then sending it on as symbol $x_{1,6}$. Similarly, the symbol mapper 113 for a second stream of data may select the symbol representing the data from the encoded data '1111', the eleventh symbol 303, then sending it on as symbol $x_{2,11}$.

When these symbols are converted to modulated carrier signals, where the phases and amplitudes may be varied in accordance with the symbols chosen, they are transmitted to a receiver UE 102. The UE 102 then measures properties of the carrier signal, for example the phase and amplitude, to determine which symbol was transmitted. However, the signals received at the UE 102 may have been subject to noise and interference from other signals, so that the received signals do not map directly onto any one symbol. A maximum likelihood detector aims to estimate which symbol to choose by selecting a candidate symbol that lies closest to the received signal by calculating a distance metrics for the candidate symbols.

Traditional ML techniques use a brute-force approach, with a complexity that scales with $M^s$, where M is the constellation order (for example, M=4, 16, and 64, for the QPSK, 16-QAM and 64-QAM modulation schemes respectively), and S is the number of spatially multiplexed streams. This exponential relationship arises because the brute-force approach calculates a Euclidian distance metric for every possible combination of symbol. For example, in a single stream system using a 4-QPSK modulation scheme, there are only four possible symbols that can be transmitted, and therefore four Euclidian distance metrics are calculated. However, in an example two-stream system using a 4-QPSK modulation scheme, a pair of symbols are transmitted, each of which can be one of four possible symbols, and therefore sixteen Euclidian distance metrics would have to be calculated for the sixteen possible combinations of symbols.

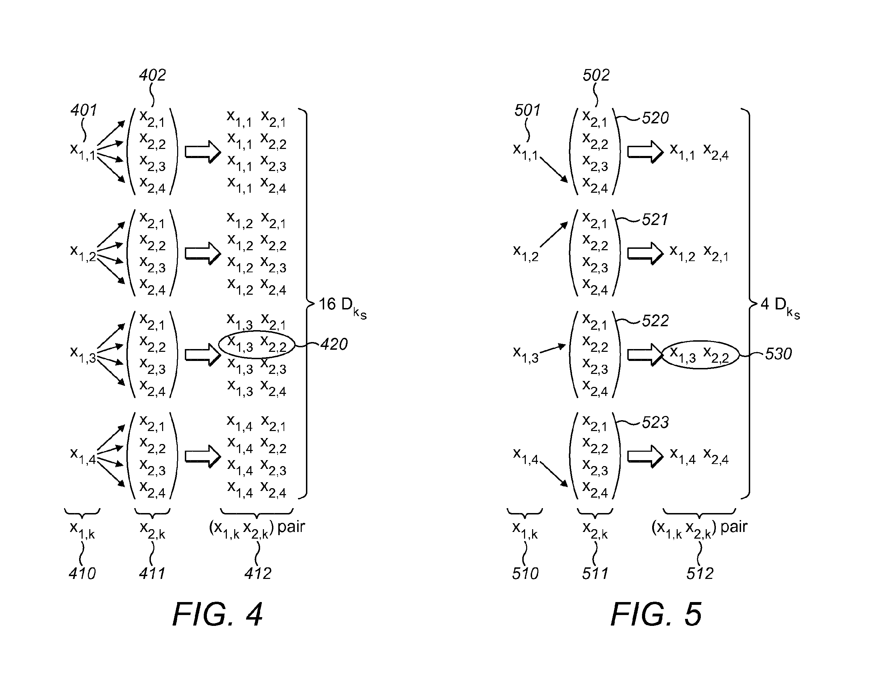

Such a scenario is illustrated in Figure 4, which shows how a brute-force approach selects a most likely pair of symbols in a 4-QPSK modulation scheme. For a given candidate symbol 401 from the first stream, the brute-force approach trials all four possible symbols for the second stream 402, resulting in four pairs of candidate symbols to calculate distance metrics for. This is repeated for all possible candidate symbols for a first stream 410, pairing each one up with all possible candidate symbols for a second stream 411, to result in a total of sixteen ($4^2$) pairs of symbols 412 that the detector has to calculate distance metrics for. If the symbols that were actually transmitted by an eNb were a third symbol for the first stream ($x_{1,3}$) and a second symbol for the second stream ($x_{2,2}$), as is the case in the illustrative example of Figure 2, then a brute-force approach would determine that the pair of candidate symbols ($x_{1,3}$, $x_{2,2}$) 412 has the lowest calculated distance metric out of the sixteen possible pairs of candidates 412.

At higher constellation orders, such as a 64-QAM modulation scheme with a modulation order of 64, the brute-force approach can result in a infinitively large increase in calculations when using more than one stream. While in a single stream system, 64 distance metrics would need to be calculated, if a two-stream system is used, then the number of distance metrics calculated by a brute-force approach increases to 4096 ($64^2$).

In the proposed ML detector of the present disclosure, rather than calculating distance metrics for every possible combination of first and second stream symbols, it goes through each candidate symbol for a first stream and then selects the best candidate symbol in a second stream to accompany that symbol from the first stream. Therefore the number of distance metrics calculated in the proposed solution is limited to the constellation order M, rather than the square ($M^2$) of the constellation order, as is the case in known ML detectors.

This is illustrated in Figure 5, which shows the distance metrics calculated in the proposed ML detector for a 2-stream MIMO system using a 4-QPSK modulation scheme. For a candidate symbol 501 for the first stream, out of the four possible candidate symbols from the second stream, the proposed ML detector selects the best candidate to pair with the first candidate symbol 501. This is repeated for each of the remaining three possible candidate symbols 510 for a first stream, where a best second-stream candidate symbol 511 is selected for each first stream candidate symbol. This results in four pairs of candidate symbols 512 for which distance metrics can be calculated (rather than the sixteen pairs in known ML detectors). If the symbols transmitted were the same as those in the example of Figure 2, then of the four pairs of candidate symbols 512 that the proposed ML detector calculates distance metrics for, pair 530 would result in the smallest distance metric and would therefore be selected in some embodiments.

Unlike existing ML detectors, the proposed solution can select the most appropriate second-stream symbol for a given first-stream symbol. To illustrate how this is achieved, the calculations performed in an example 2-stream 2x2 MIMO system, like that shown in Figure 1, will now be described.

The symbol $x_1$ 151, sent from a first transmitter antenna 130, and the symbol $x_2$ 152, sent from a second transmitter antenna 131, arrive at receiver antennas 132 and 133 after being affected by the channel conditions represented by a channel matrix **H**. At the receiver antennas 132 and 133 there will also be additive Gaussian noise $n_1$ and $n_2$ respectively. Therefore the received signals $y_1$ and $y_2$ can be modelled as:

$$\begin{bmatrix} y_1 \\ y_2 \end{bmatrix} = \begin{bmatrix} h_{11} & h_{21} \\ h_{12} & h_{22} \end{bmatrix} \begin{bmatrix} x_1 \\ x_2 \end{bmatrix} + \begin{bmatrix} n_1 \\ n_2 \end{bmatrix} \tag{1}$$

More generally, this can be written as

$$\underline{y} = \boldsymbol{H}\underline{x} + \underline{n} \qquad (2)$$

where $\underline{y}$ is a $1 \times R_x$ vector of signals received at the receiver antennas, $\underline{x}$ is the $1 \times S$ vector of symbols transmitted (where S is the number of streams), and $\underline{n}$ is the $1 \times R_x$ vector of noise components added at the receiver antennas.

Given a local estimate $\hat{H}$ of the channel matrix, it is possible to hypothesise what a received signal would be given a hypothetical choice of transmit symbols $\underline{x'}$. Such a hypothetical received signal would be given by

$$\underline{y'} = \hat{\boldsymbol{H}}\underline{x'} + \underline{n} \qquad (3)$$

The correct choice of hypothetical transmit symbols $\underline{x'}$ would be the one that results in hypothetical received signals $\underline{y'}$ that match closest to the actual received set of signals $\underline{y}$. In other words, hypothetical transmit symbols $\underline{x'}$ should be chosen such that the error vector $\underline{e}$ is the smallest:

$$\underline{e} = \underline{y} - \hat{\boldsymbol{H}}\underline{x'} \qquad (4)$$

As each element of $\underline{x'}$ can be any one of k possible symbols (where k is equal to the modulation order M of the modulation scheme), formula (4) can be re-written for 2-stream 2x2 MIMO systems as:

$$\begin{bmatrix} e_{1,k} \\ e_{2,k} \end{bmatrix} = \begin{bmatrix} y_1 \\ y_2 \end{bmatrix} - \begin{bmatrix} \hat{h}_{11} & \hat{h}_{21} \\ \hat{h}_{12} & \hat{h}_{22} \end{bmatrix} \begin{bmatrix} x'_{1,k} \\ x'_{2,k} \end{bmatrix} \qquad (5)$$

The Euclidian distance metric for each hypothesis can be calculated by squaring the magnitude of the error vector given in equation (5). The overall distance metric $D_k$ for hypothesis k is then equal to the sum of $|e_{i,k}|^2$ over $N_{Rx}$ receive antennas, where i is the number of receive antennas:

$$D_k = \|e_k\|^2 = \sum_{i=1}^{N_{rx}} |e_{i,k}|^2 \qquad (6)$$

While a brute-force ML detector would go through all k possible symbols over both streams; the proposed solution approaches the problem differently. Each column of $\hat{H}$ in equation (5), corresponding to each stream, is considered separately. By performing a $\mathrm{norm}^2$ operation on the Euclidian distance metric of equation (6) while considering the columns separately, effectively breaks the problem into a superposition of the two transmit streams.

This is equivalent to:

$$\|e_k\|^2 = \left\| y - \hat{h}_{c1} x'_{1,k} - \hat{h}_{c2} x'_{2,k} \right\|^2 \qquad (7)$$
$$= \left( y - \hat{h}_{c1} x'_{1,k} - \hat{h}_{c2} x'_{2,k} \right)^H \left( y - \hat{h}_{c1} x'_{1,k} - \hat{h}_{c2} x'_{2,k} \right)$$

where $\hat{h}_{c1}$ and $\hat{h}_{c2}$ denote the first and second columns of $\hat{H}$ respectively, y is a 2x1 column vector and $x_{1,k}'$ and $x_{2,k}'$ are complex scalars containing the two transmit symbols for hypothesis k. In scenarios not limited to a 2x2 MIMO system, equation (7) can be written more generally with receive antenna i and transmit stream j as:

$$\|e_k\|^2 = \left\| y - \sum_{j=1}^{N_S} \hat{h}_{j,i} x'_{j,k} \right\|^2 = \sum_{i=1}^{N_{Rx}} \left[ \left( y_i - \sum_{j=1}^{N_S} \hat{h}_{j,i} x'_{j,k} \right)^* \left( y_i - \sum_{j=1}^{N_S} \hat{h}_{j,i} x'_{j,k} \right) \right] \qquad (8)$$

Returning to the 2x2 case, equation (7) can be rearranged such that all of the $x'_{1,k}$-related terms (denoted here as $V_1$) are grouped, leaving a residual term ($V_2$):

$$\left\| y - \hat{H} x'_k \right\|^2 = \|e_k\|^2 = \left\| y - \hat{h}_{c1} x'_{1,k} - \hat{h}_{c2} x'_{2,k} \right\|^2 = V_1 + V_2 \qquad (9)$$

Where:

$$V_1 = \|y\|^2 + \left\|\hat{h}_{c1}\right\|^2 \left|x'_{1,k}\right|^2 - 2Re\{\hat{h}_{c1}^H y x'^*_{1,k}\} \qquad (10a)$$

$$V_2 = \left\|\hat{h}_{c2}\right\|^2 \left|x'_{2,k}\right|^2 - 2Re\{\hat{h}_{c2}^H y x'^*_{2,k} - \hat{h}_{c2}^H \hat{h}_{c1} x'_{1,k} x'^*_{2,k}\} \qquad (10b)$$

By completing the square, $V_2$ can be restructured to arrive at:

$$V_2 = -\left\|\hat{h}_{c2}\right\|^2 \left| \frac{\hat{h}_{c2}^H y - \hat{h}_{c2}^H \hat{h}_{c1} x'_{1,k}}{\left\|\hat{h}_{c2}\right\|^2} \right|^2 + \left\|\hat{h}_{c2}\right\|^2 \left| \frac{\hat{h}_{c2}^H y - \hat{h}_{c2}^H \hat{h}_{c1} x_{1,k}}{\left\|\hat{h}_{c2}\right\|^2} - x'_{2,k} \right|^2 \qquad (11)$$

All of the terms in $V_1$ and $V_2$ are a function of $x'_{1,k}$ except for the last term in $V_2$ which is also a function of $x'_{2,k}$. Therefore, equation (9) can be re-written as:

$$\left\| y - \hat{H} x'_k \right\|^2 = \|e_k\|^2 = V_1 + V_2 = f\left(x'_{1,k}\right) + C\left|g\left(x'_{1,k}\right) - x'_{2,k}\right|^2 \qquad (12)$$

The terms C, $f(x'_{1,k})$ and $g(x'_{1,k})$ of equation 12 are identified as:

$$f\left(x'_{1,k}\right) = \|y\|^2 + \left\|\hat{h}_{c1}\right\|^2 \left|x'_{1,k}\right|^2 - 2Re\{\hat{h}_{c1}^H y x'^*_{1,k}\} - \left\|\hat{h}_{c2}\right\|^2 \left| \frac{\hat{h}_{c2}^H y - \hat{h}_{c2}^H \hat{h}_{c1} x'_{1,k}}{\left\|\hat{h}_{c2}\right\|^2} \right|^2 \qquad (13)$$

$$g\left(x'_{1,k}\right) = \frac{\hat{h}_{c2}^H y - \hat{h}_{c2}^H \hat{h}_{c1} x'_{1,k}}{\left\|\hat{h}_{c2}\right\|^2} \qquad (14)$$

$$C = \left\|\hat{h}_{c2}\right\|^2 \qquad (15)$$

An advantage of bringing the equation (9) into the form $\|e_k\|^2 = f(x'_{1,k}) + C|g(x'_{1,k}) - x'_{2,k}|^2$ is that the $x'_{2,k}$ term is separated from terms $f(x'_{1,k})$ and $g(x'_{1,k})$ which are functions of $x'_{1,k}$. Because the function $f(x'_{1,k})$ will always be positive, for a given first stream candidate symbol $x'_{1,k}$, it is possible to minimise the distance metric by simply finding a second stream candidate $x'_{2,k}$ closest to the function $g(x'_{1,k})$. Because $x'_{2,k}$ is a constellation point, finding this value can be done quickly and efficiently by performing a simple slicing operation to find the constellation point closest to a calculated $g(x'_{1,k})$. This avoids having to search over M possible values of $x'_{2,k}$ for each hypothetical value of $x'_{1,k}$. The complexity of the problem is thereby reduced from a search over $M^2$ hypotheses to a search over M hypotheses, each with some additional comparisons to calculate $x'_{2,k}$. No approximations are made in bringing the distance metric into the form shown in equation (12), and therefore the answer obtained would be exactly the same as that found through a traditional ML detector method.

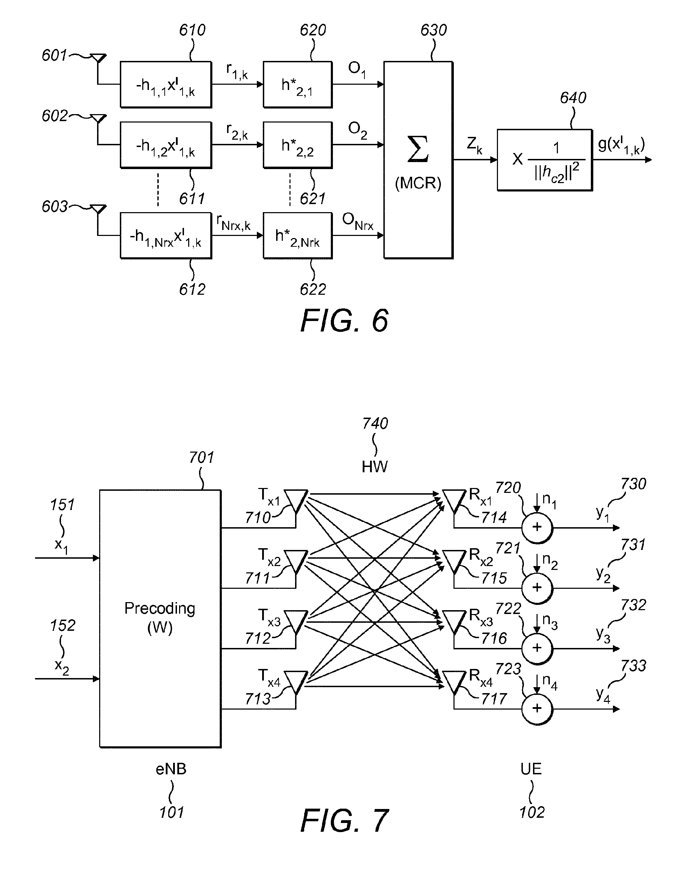

Determining an appropriate second stream candidate symbol to pair with a given first stream candidate symbol requires a calculation of function $g(x'_{1,k})$ be made for a given $x'_{1,k}$ symbol. This function, although arrived at through the maths above, has a physical interpretation that can aid in the calculations, as illustrated in Figure 6.

Figure 6 shows a number of receiver antennas 601 to 603 each receiving a signal $y_i$, where i = 1 to $N_{Rx}$. For each of these antennae 601 to 603, a residual signal $r_i$ is formed by subtracting the hypothetical contributions 610 to 612 of each of the first stream candidate symbols at each of the antennae. This hypothetical contribution is given by $\hat{h}_{1,i}x'_{1,k}$. The residual signals for each of the antennae may have a bank of matched filters 620 to 622 of the form $\hat{h}_{2,i}^{H}$ applied to them, resulting in outputs $O_1$ to $O_{Rx}$. These output terms may be summed over the receiver antennas in a Maximum Ratio Combining (MRC) 630 operation in order to form the output $Z_k$:

$$Z_k = \sum_{i=1}^{N_{Rx}} \hat{h}_{2,i}^{*} \, r_{i,k} \qquad (16)$$

The term $Z_k$ contains an '$x_2$-signal-amplitude' of $(|h_{2,1}|^2+|h_{2,2}|^2+...|h_{2,Nrx}|^2)$ and so is normalised by $\|\hat{h}_{c2}\|^{-2}$ to leave $g(x'_{1,k})$ containing an $x_2$-signal component of magnitude $|x_2|$. As a result, function $g(x'_{1,k})$ represents a "noisy" constellation (with the hypothetical $x'_{1,k}$ component removed) on which an estimate of $x_{2,k}$ can be made. By using the above physical interpretation of the function $g(x'_{1,k})$, it may be possible to more efficiently calculate the function using hardware-based calculation means.

Once $x'_{2,k}$ has been determined for a given $x'_{1,k}$, a number of candidate pairs $\underline{x}' = [x'_{1,k} \, x'_{2,k}]^T$, can be hypothesised for each possible first stream candidate. The pair that is eventually selected may be based on a hard or a soft decision. In the case of a hard decision, the pairs generated may be used to form the decision metric $D_k$ via equations (4) and (5). Only one value of $D_k$ (as opposed to M in the brute-force case) is derived for each $x'_{1,k}$ therefore, as mentioned previously, the complexity scales only with M and not with $M^2$ (generally $M^S$).

For a $2xN_{Rx}$ MIMO system, a hard-decision fast-ML process can be viewed as performing the steps:

1. For each of k=1 to M hypothetical $x'_{1,k}$ values
2. Subtract its hypothetical contribution $(h_1x_{1,k})$ from the received signals at each receive antenna.
3. Individually match-filter the residual signals on each Rx antenna (e.g. multiply by $\hat{h}_{2,i}^{*}$)
4. Maximum-Ratio-Combine (MRC), or otherwise sum, the match-filtered residual signals across receive antennas.
5. Normalise the output (by multiplying by $\|\hat{h}_{c2}\|^{-2}$)
6. Slice the result for this k to produce a most-likely symbol pair $(x'_{1,k}, x'_{2,k})$
7. Calculate the corresponding distance metric $e_{i,k}$ for each Rx antenna
8. Sum the distance metrics across Rx antennas to produce a total distance metric $D_k$
9. Select the pair $(x'_{1,k}, x'_{2,k})$ (from M stored pairs) having the smallest distance metric $D_k$

For performance reasons and to enable HARQ combining, it may be preferable to perform a soft decision ML. Soft outputs are required in the form of log likelihood ratios (LLRs) in order to support turbo decoding.

The LLR of a bit "b" for received signal y is defined as:

$$LLR_b = \ln \left\{ \frac{P(b = 1|y)}{P(b = 0|y)} \right\} \qquad (17)$$

Using Bayes rule, (17) may be re-written as:

$$LLR_b = \ln\left\{\frac{P(b=1).P(y).P(y|b=1)}{P(b=0).P(y).P(y|b=0)}\right\} = \ln\left\{\frac{P(y|b=1)}{P(y|b=0)}\right\} \tag{18}$$

assuming equal probability of transmission for bit values 0 and 1.

That is, the numerator and denominator may be derived simply via the probability density functions (PDFs) of the received signal y for cases in which a bit value of 1 and 0 were transmitted respectively.

To form such PDFs, the statistics of the signal plus noise and interference at the receiver's output must be known. For linear receivers (such as Zero-Forcing, and Minimum Mean Squared Error), the signal power and variance of the noise and/or interference at the receiver output may be derived by mapping the signal and noise powers at the receiver input to its output via the known transfer function of the receiver.

In the case of BPSK and QPSK modulation, the LLR then simplifies to a simple scaling of the receiver output by a factor proportional to the output SNIR. For higher-order modulations, such as 16-QAM, LLR derivation is slightly more complex, but may still make use of an SNIR estimate at the receiver output.

In contrast to a linear receiver, the ML receiver operates by selecting the modulation symbol that produces the minimum residual error, therefore a PDF of the (hard-decision) output signal does not contain any probability information related to the noise or interference.

Conceptually, the LLR of a ML decision bit can be interpreted as a measure of how close the symbol pair combination to any of the other possible symbol pair combinations in which the value of the bit of interest is inverted. In other words, if the Euclidean distance to another symbol hypothesis having a different bit value is small, the confidence in that bit decision may also be small.

In order to derive an LLR for the $b^{th}$ considered bit in a symbol combination $(x'_1, x'_2)$, the brute-force ML approach would be to evaluate the error norm distances $D_k$ for each of the possible $M^2$ symbol combinations (each hypothesis "k"), and then for each considered bit, group the $M^2$ distances into two sets:

    i) those k ($k \in K_1$) corresponding to a bit value of "1" for bit b, and
    ii) those k ($k \in K_0$) corresponding to a bit value of "0" for bit b

The LLR would then be then:

$$LLR_b = ln\left\{\frac{\sum_{k \in K_1} e^{\frac{-D_k}{\beta 2\sigma^2}}}{\sum_{k \in K_0} e^{\frac{-D_k}{\beta 2\sigma^2}}}\right\} \tag{19}$$

where $D_k$ is the error norm as per equation (6).

In equation (19), an estimate of the noise power $(2\sigma^2)$ is used in order to transform Euclidean distance into a probability assuming Gaussian additive noise. The correct value for $\beta$ may adopt either a value of 1 or $N_{Rx}$. However, this may result in a simple scaling of the LLRs and may therefore be ignored.

Due to the inverse exponentiation, the terms within each summation tend to be dominated by just one value, corresponding to the minimum $D_k$ in the set. An approximation commonly known as the "max-log" approximation may be made without much loss in LLR accuracy, wherein it is assumed that:

$$\sum_{k \in K} e^{\frac{-D_k}{\beta 2\sigma^2}} \approx \frac{-1}{\beta 2\sigma^2}\left\{\min_{k \in K}(D_k)\right\} \tag{20}$$

The max-log approximation to equation (19) then simplifies to:

$$LLR_b \approx \frac{1}{\beta 2\sigma^2}\left\{\min_{k \in K_0}(D_k) - \min_{k \in K_1}(D_k)\right\} \tag{21}$$

However, such a brute force approach for soft decision decoding (max-log approximated or otherwise) would suffer from the same aforementioned complexity issues as brute-force hard decision decoding in that that $M^2$ distance metrics $D_k$ would be required. Furthermore, if such a soft decision decode were performed, formation of a subsequent hard decision is trivial, obviating any benefit from the complexity reduction techniques disclosed for hard decision decoding. Methods that allow translation of the hard decision complexity reductions to the problem of soft decoding are therefore required.

For the 2-stream case, the technique employed is to use the low-complexity hard decision process to reduce the search for potential "nearest-distance neighbours" in the numerator and denominator of equation (19), such that the complexity reduces from order $M^2$ to 2M. Due to the fact that equation (19) requires for all $M^2$ distances to be calculated, the complexity simplification may only be used in conjunction with the max-log approximation of (21). In equation (21), it is known that one of the two $\min(D_k)$ terms are associated with the originally transmitted symbol pair $(x'_{1,k}, x'_{2,k})$. Therefore, the result is an identification of the other $\min(D_k)$ term without calculating the full set of $M^2$ $D_k$ values, reducing the complexity.

In light of the above, the hard decision method previously described may be modified to perform a soft decision instead. Rather than select the pair $(x'_{1,k}, x'_{2,k})$ that has the smallest corresponding distance metric to make a hard decision, this step can be replaced in order to achieve a soft decision.

The max-log soft decision extension to this scheme is (for each bit b) is to perform two min searches, each over half of the "M" calculated $D_k$ values, and to form the LLR via equation (21). This works for a first stream $(x_1)$ as all possible $x_1$ values are tested (and paired with their best-companion $x_2$), hence the nearest neighbour to the hard decision for a given flip of bit b in $x_1$ lies somewhere within the subset of M evaluated $D_k$ metrics.

However, this may not work for the second stream $(x_2)$. As the best-companion $x_2$ values are formed via a slicing operation, the symbol hypothesis corresponding to a given flip of bit b in $x_2$ cannot be guaranteed to have been tested and thus the nearest $x_2$ neighbour may not lie in the subset of "M" evaluated $D_k$ values.

In order to solve this problem, a second set of "M" $D_k$ values are formed, wherein each possible $x_2$ value is tested and paired with its best-companion $x_1$. This is therefore a mirror of the process for stream 1, and results in a new set of $D_k$ within which the nearest $x_2$ neighbour for a given flip of bit b in $x_2$ is known to exist.

This process may be summarised as shown in the pseudo-code of:

```
%-------- stream #1---------
For k = 1 to M
        Hypothesise symbol x'1,k
        Subtract ĥc1x'1,k from received signal y to form a residual vector signal rk Equalise and MRC the signal rk
        across antennas to form gk
        Slice gk to identify the best-companion x'2,k. The pair is [x'1,k, x'2,k]
        Form the error norm distance metric Dk for this pair
End
For each bit b of x1
        Identify the set of Dk values, K0, for which bit b = 0
        Identify the set of Dk values, K1, for which bit b = 1
        Find the minimum Dk in set K0 and the minimum Dk in set K1
        Derive the max-log approximation to the LLR.
End
```

```
%-------- stream #2---------
For k = 1 to M
        Hypothesise symbol x'2,k
        Subtract ĥc2x'2,k from received signal y to form a residual vector signal rk
        Equalise and MRC the signal rk across antennas to form gk
        Slice gk to identify the best-companion x'1,k. The pair is [x'1,k, x'2,k]
        If not already calculated during the stream 1 process, form the error norm distance metric Dk for this pair
End
For each bit b of x2
        Identify the set of Dk values, K0, for which bit b = 0
        Identify the set of Dk values, K1, for which bit b = 1
        Find the minimum Dk in set K0 and the minimum Dk in set K1
```

(continued)

```
%--------- stream #2---------
        Derive the max-log approximation to the LLR for x2 bit b.
End
```

As is evident from the above pseudo-code, through the use of this lower-complexity method, the maximum number of $D_k$ metrics that need to be evaluated is 2M, compare with $M^2 D_k$ metrics if equations (19) or max-log equivalent (21), were to be implemented directly.

For higher-order modulations such as 64-QAM (M=64), the achieved reduction in the number of $D_k$ metrics that need to be calculated is significant. For example, in this case, and with two streams, the described process is able to reduce 4096 metric calculations to just 128, an approximate saving of 97%.

In the example embodiments provided so far, only a 2-stream 2x2 MIMO system have been provided. However, it would be clear that the improved ML detector may be used in other systems as well. For example, Figure 7 shows a 2-stream 4x4 MIMO system that the proposed solution will also work with. The two symbols $x_1$ 151 and $x_2$ 152 are precoded 701 using precoding matrix W so that the two streams can be broadcast over the four transmitter antennas 710 to 713 provided in the eNb 101. The resultant signals are then received at the four receiver antennas 714 to 717 of UE 102. The received signals $y_1$ 730 to $y_4$ 733 can still be given by:

$$\underline{y} = \boldsymbol{H}\underline{x} + \underline{n} \qquad\qquad (22)$$

where $\underline{y}$ is a 1x4 column vector $[y_1,y_2,y_3,y_4]^T$, $\underline{x}$ is a 1x2 column vector $[x_1, x_2]^T$, $\underline{n}$ is a 1x4 column vector $[n_1,n_2,n_3,n_4]^T$ of all the noise components 720 to 723 received at each detector, and $\boldsymbol{H}$ is modified to take into account the precoding 701 step such that the channel matrix is replaced by $\boldsymbol{HW}$. The modified channel matrix will therefore be a 4x2 matrix, with four rows corresponding to the four receive antennas, and two columns corresponding to the two streams.

The embodiments described above have generally assumed Gaussian, white noise contributions. However, interference from intra-frequency neighbouring cells (coloured noise) may also degrade performance if not taken into account. Therefore, the proposed ML detector may be further improved to compensate for this interference.

In the case where there is no interference and there is equal noise in each receiver path, the maximum likelihood decision may be written as:

$$\underline{x} = \frac{1}{\sigma_n^2} arg\min_x \left|\underline{y} - \boldsymbol{H}\underline{x}'\right|^2 \qquad\qquad (23)$$

However, when taking into account interference and un-equal noise in each receiver path, this equation changes to:

$$\underline{x} = arg\min_x \left(\underline{y} - \boldsymbol{H}\underline{x}'\right)^H C^{-1} \left(\underline{y} - \boldsymbol{H}\underline{x}'\right) \qquad\qquad (24)$$

where the noise matrix C is given by the noise covariance matrix estimation:

$$C = E\{\underline{n}\underline{n}^H\} = E\left\{\left(\underline{y} - \boldsymbol{H}\underline{x}_{pilot}\right)\left(\underline{y} - \boldsymbol{H}\underline{x}_{pilot}\right)^H\right\} \qquad\qquad (25)$$

A Cholesky decomposition can be performed on the noise matrix, and by doing so it is possible to rewrite the ML equation with noise (23) to be the same form as the ML equation without noise (22), thus reducing the solution to a pre-processing stage prior to ML:

$$C = U^H U \qquad\qquad (26)$$

$$\underline{x} = arg\min_{x} \left(\underline{y} - \boldsymbol{H}\underline{x}'\right)^{H} \boldsymbol{U}^{H}\boldsymbol{U}\left(\underline{y} - \boldsymbol{H}\underline{x}'\right) \qquad (27)$$

$$\underline{x} = arg\min_{x} \left| \boldsymbol{U}\left(\underline{y} - \boldsymbol{H}\underline{x}'\right)\right|^{2} = arg\min_{x} \left| \boldsymbol{U}\left(\underline{\tilde{y}} - \boldsymbol{\tilde{H}}\underline{x}'\right)\right|^{2} \qquad (28)$$

The complexity of the whitening matrix calculation may be reduced by averaging the covariance matrix, thus reducing the number if complex Cholesky decomposition operations to perform.

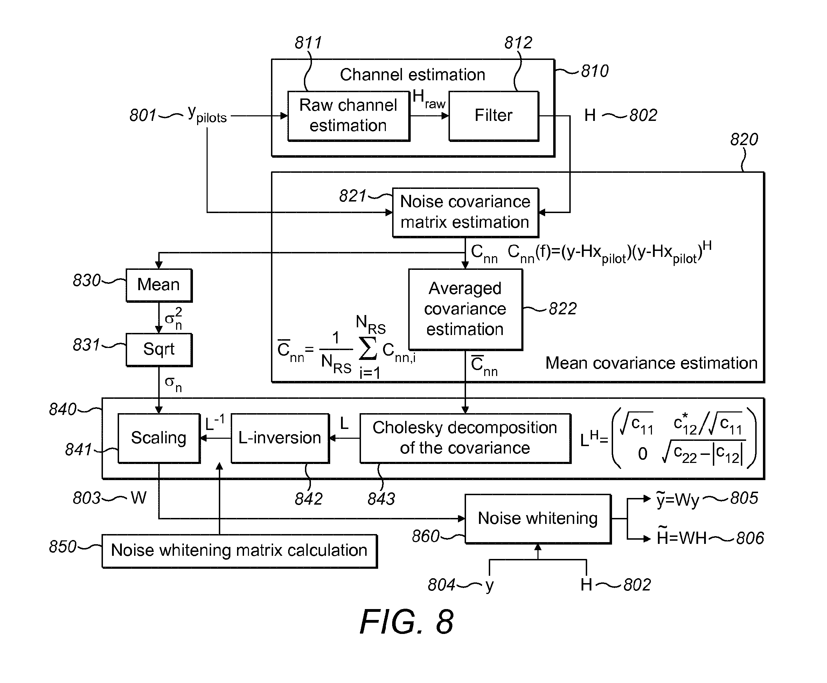

Figure 8 illustrates the steps for a whitening matrix calculation for interference suppressions. Given $y_{pilots}$ 801, a channel estimation 810 is performed for a filtered 812 raw channel 811. At a mean covariance stage 820, the covariance is estimated 821 at each pilot position by the difference between the raw and filtered raw channel estimations. Next, the mean covariance is calculated 822 for each resource block (RB) based on the covariance estimates in the corresponding RB.

At step 843 the Cholesky decomposition is performed for each RB, but as this is based on the mean covariance, this decomposition only has to be performed once per resource block. The lower triangular matrix **L** is then inverted 842 and scaled 841. By scaling with respect to an averaged 830 and square rooted 831 noise, and performing a noise whitening matrix calculation 850, a whitening matrix **W** 803 may be determined. This may then be used to perform noise whitening 860 on received signal y 804 and channel matrix 802. The result of the noise whitening step 860 is to pre-process y and **H** to form y 805 and $\tilde{H}$ 806 to compensate for the coloured noise. As the y and **H** can simply be replaced with these modified values, they can be incorporated into the proposed ML detector calculations to improve the results without requiring substantial changes in the calculations.

Embodiments have been described herein by way of example and these embodiments are not intended to be limiting. Rather, it is contemplated that some embodiments may be subject to variation or modification without departing from the spirit and scope of the disclosed solutions.

It is to be understood that the present disclosure includes all permutations of combinations of the optional features set out in the embodiments described above. In particular, it is to be understood that the features set out in the appended dependent claims are disclosed in combination with any other relevant independent claims that may be provided, and that this disclosure is not limited to only the combination of the features of those dependent claims with the independent claim from which they originally depend.

**Claims**

1. A method in an electronic device for use with a multiple-input multiple-output (MIMO) communication system of performing maximum likelihood detection on spatially-multiplexed streams, the method comprising:

    receiving a plurality of received signals at a plurality of receiver antennas, the plurality of received signals corresponding to a plurality of transmit symbols, each transmit symbol being one of a number M possible symbols; for each of a value k = 1 to M:

    selecting a first stream candidate symbol,
    for each of said receiver antennas, calculate a residual signal,
    combining said calculated residual signals,
    selecting a second stream candidate symbol for said value k based on the result of said combination to form a symbol pair comprising said first stream candidate symbol and said second stream candidate symbol; and
    calculating a corresponding distance metric for said symbol pair for said value k; and,

    selecting one of the symbol pairs based on said calculated distance metrics.

2. The method of claim 1, wherein calculating a residual signal comprises subtracting a function of said first stream candidate symbol from the received signal corresponding to the receiver antenna.

3. The method of claim 2, wherein the function of said first stream candidate symbol comprises the first stream candidate symbol multiplied by an element of a channel matrix corresponding to said receiver antenna.

4. The method of any preceding claim, further comprising match-filtering said residual signals on each receiver antenna prior to combining said calculated residual signals,.

5. The method of claim 4, wherein match-filtering said residual signals comprises multiplying said residual signals by a conjugate of an element of a channel matrix corresponding to each receiver antenna.

6. The method of any preceding claim, wherein combining said calculated residual signals comprises a maximum ratio combine (MRC) across said plurality of receiver antennas.

7. The method of any preceding claim, wherein combining further comprises normalising the combination.

8. The method of any preceding claim, wherein the result of said combination is of the form
$$g(x'_{1,k}) = \frac{\hat{h}_{c2}^{H} y - \hat{h}_{c2}^{H} \hat{h}_{c1} x'_{1,k}}{\|\hat{h}_{c2}\|^2},$$ where $x'_{1,k}$ is said first stream candidate symbol, $\hat{h}_{c2}$ is the second column of a channel matrix, and y is a vector of said received signals.

9. The method of any preceding claim, wherein selecting a second stream candidate symbol comprises selecting a symbol equal to the result of said combination.

10. The method of any preceding claim, wherein selecting a second candidate symbol comprises slicing the result of said combination.

11. The method of any preceding claim, wherein selecting the one of the symbol pairs is a hard decision based of the symbol pair with smallest corresponding calculated distance metric.

12. The method of any of claims 1 to 10, wherein selecting the one of the symbol pairs is a soft decision comprising:

    performing two minimum searches, each minimum search being performed over half said calculated distance metrics; and
    calculating a log likelihood ratio 'LLR' using said two minimum searches.

13. The method of claim 12, wherein the LLR is of the form $LLR_b \approx \frac{1}{\beta 2\sigma^2}\{\min_{k \in K_0}(D_k) - \min_{k \in K_1}(D_k)\}$, where $2\sigma^2$ is an estimate of a power noise, $\min_{k \in K_0}(D_k)$ and $\min_{k \in K_1}(D_k)$ are the two minimum searches, $D_k$ is the calculated distance metric, $K_0$ is a set of values of k corresponding to a bit value of 0, and $K_1$ is a set of values of k corresponding to a bit value of 1.

14. The method of any preceding claim, wherein at least one of the received signals and a channel matrix are noise whitened using a noise whitening matrix determined from an averaged covariance.

15. The method of any preceding claim, wherein the electronic device is one of a mobile device and a network component.

16. An electronic device comprising:

    one or more processors;
    a plurality of receiver antennas; and,
    a memory storing instructions which, when executed by one or more of the processors, cause the device to operate in accordance with the method of any of claims 1 to 15.

FIG. 1

4-QPSK

FIG. 2

16-QAM

FIG. 3

FIG. 4

401
402

$x_{1,1}$

$\begin{pmatrix} x_{2,1} \\ x_{2,2} \\ x_{2,3} \\ x_{2,4} \end{pmatrix}$ ⟹ $\begin{matrix} x_{1,1} & x_{2,1} \\ x_{1,1} & x_{2,2} \\ x_{1,1} & x_{2,3} \\ x_{1,1} & x_{2,4} \end{matrix}$

$x_{1,2}$

$\begin{pmatrix} x_{2,1} \\ x_{2,2} \\ x_{2,3} \\ x_{2,4} \end{pmatrix}$ ⟹ $\begin{matrix} x_{1,2} & x_{2,1} \\ x_{1,2} & x_{2,2} \\ x_{1,2} & x_{2,3} \\ x_{1,2} & x_{2,4} \end{matrix}$

$x_{1,3}$

$\begin{pmatrix} x_{2,1} \\ x_{2,2} \\ x_{2,3} \\ x_{2,4} \end{pmatrix}$ ⟹ $\begin{matrix} x_{1,3} & x_{2,1} \\ x_{1,3} & x_{2,2} \\ x_{1,3} & x_{2,3} \\ x_{1,3} & x_{2,4} \end{matrix}$   420

$x_{1,4}$

$\begin{pmatrix} x_{2,1} \\ x_{2,2} \\ x_{2,3} \\ x_{2,4} \end{pmatrix}$ ⟹ $\begin{matrix} x_{1,4} & x_{2,1} \\ x_{1,4} & x_{2,2} \\ x_{1,4} & x_{2,3} \\ x_{1,4} & x_{2,4} \end{matrix}$

$16\ D_{k_s}$

$x_{1,k}$   $x_{2,k}$   $(x_{1,k}\ x_{2,k})$ pair

410   411   412

FIG. 5

501
502

$x_{1,1}$

$\begin{pmatrix} x_{2,1} \\ x_{2,2} \\ x_{2,3} \\ x_{2,4} \end{pmatrix}$ 520 ⟹ $x_{1,1}\ x_{2,4}$

$x_{1,2}$

$\begin{pmatrix} x_{2,1} \\ x_{2,2} \\ x_{2,3} \\ x_{2,4} \end{pmatrix}$ 521 ⟹ $x_{1,2}\ x_{2,1}$

$x_{1,3}$

$\begin{pmatrix} x_{2,1} \\ x_{2,2} \\ x_{2,3} \\ x_{2,4} \end{pmatrix}$ 522 ⟹ $x_{1,3}\ x_{2,2}$   530

$x_{1,4}$

$\begin{pmatrix} x_{2,1} \\ x_{2,2} \\ x_{2,3} \\ x_{2,4} \end{pmatrix}$ 523 ⟹ $x_{1,4}\ x_{2,4}$

$4\ D_{k_s}$

$x_{1,k}$   $x_{2,k}$   $(x_{1,k}\ x_{2,k})$ pair

510   511   512

*FIG. 6*

*FIG. 7*

FIG. 8

EP 2 733 867 A1

| | Europäisches Patentamt |  |  |
|---|---|---|---|
| | European Patent Office | **EUROPEAN SEARCH REPORT** | **Application Number** |
| | Office européen des brevets | | EP 12 19 3149 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 843 534 A2 (SAMSUNG ELECTRONICS CO LTD [KR]) 10 October 2007 (2007-10-10) * paragraph [0002] - paragraph [0020]; figure 1 * * paragraph [0028] - paragraph [0072]; figures 2A-5B * | 1-16 | INV. H04B7/08 H04L25/03 ADD. H04B7/06 H04B7/04 |
| A | KEUN CHUL HWANG ET AL: "Iterative Joint Detection and Decoding for MIMO-OFDM Wireless Communications", SIGNALS, SYSTEMS AND COMPUTERS, 2006. ACSSC '06. FORTIETH ASILOMA R CONFERENCE ON, IEEE, PI, 1 October 2006 (2006-10-01), pages 1752-1756, XP031081333, ISBN: 978-1-4244-0784-2 * the whole document * | 1-16 | |
| A | EP 1 750 402 A1 (SAMSUNG ELECTRONICS CO LTD [KR]) 7 February 2007 (2007-02-07) * the whole document * | 1-16 | TECHNICAL FIELDS SEARCHED (IPC) H04B H04L |

The present search report has been drawn up for all claims

| Place of search | Date of completion of the search | Examiner |
|---|---|---|
| Munich | 24 April 2013 | Sieben, Stefan |

## ANNEX TO THE EUROPEAN SEARCH REPORT
## ON EUROPEAN PATENT APPLICATION NO.

EP 12 19 3149

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2013

| Patent document cited in search report | | Publication date | Patent family member(s) | | Publication date |
|---|---|---|---|---|---|
| EP 1843534 | A2 | 10-10-2007 | CN | 101056131 A | 17-10-2007 |
| | | | EP | 1843534 A2 | 10-10-2007 |
| | | | JP | 4503629 B2 | 14-07-2010 |
| | | | JP | 2007282243 A | 25-10-2007 |
| | | | KR | 20070099950 A | 10-10-2007 |
| | | | US | 2007237272 A1 | 11-10-2007 |
| EP 1750402 | A1 | 07-02-2007 | CN | 1941659 A | 04-04-2007 |
| | | | EP | 1750402 A1 | 07-02-2007 |
| | | | JP | 4504958 B2 | 14-07-2010 |
| | | | JP | 2007043722 A | 15-02-2007 |
| | | | KR | 100891448 B1 | 01-04-2009 |
| | | | US | 2007032206 A1 | 08-02-2007 |

For more details about this annex : see Official Journal of the European Patent Office, No. 12/82